# EUROPEAN PATENT SPECIFICATION

(11) **EP 4 582 370 B1**
(45) Date of publication and mention of the grant of the patent: **25.02.2026**
(21) Application number: 24223111.6
(22) Date of filing: 23.12.2024
(51) Int. Cl.: B67D 1/07, A47J 31/60, B67D 1/08

(54) **SELF-CLEANING MULTI-SERVINGS BEVERAGE DISPENSING SYSTEM**
SELBSTREINIGENDES GETRÄNKEABGABESYSTEM MIT MEHREREN SERVIEREINHEITEN
SYSTÈME DE DISTRIBUTION DE BOISSON AUTONETTOYANT À MULTIPLES BOISSONS

(30) Priority: 05.01.2024 US 202463617891 P
(43) Date of publication of application: 09.07.2025
(73) Proprietor: Bello Solutions Inc., Montreal Québec H2V 1Z8 (CA)
(72) Inventor: Schaal, Marc, Montreal, H2G 2A8 (CA); Bouland, Clement, Montreal, H2V 1Z8 (CA)
(74) Representative: Riechelmann & Carlsohn Patentanwälte PartG mbB

(56) References cited:
- EP-A1- 4 303 172
- WO-A1-2022/169569
- US-A- 2 777 452

## Description

### TECHNICAL FIELD

The present disclosure relates to the field of beverage dispensing systems. More specifically, the present disclosure presents a self-cleaning multi-servings beverage dispensing system.

### BACKGROUND

Customer expectations have radically changed over the past years and have shown a strong demand for water, low-calorie beverages, and functional beverages; while in the meantime, a part of the population wants to live an ecofriendly lifestyle and refuses to buy single-use bottled water.

There is also an increasing concern about the integrity of the public's municipal water quality and whether ordinary tap water is always safe to drink. In response to these concerns, people commonly buy bottled water as an alternative to tap water.

Most of the beverage dispensers, coffee machines and tea brewers on the market use single servings pods, which are often costly and criticized by the consumers who are aware of the massive pollution generated by single use containers. A growing number of consumers are therefore willing to use reusable or multi servings containers.

To accommodate user expectations, multi-servings beverage dispensing systems have been developed, allowing a single ingredient container to be used for dispensing several servings of a beverage. Such multi-servings beverage dispensing systems generally include a mixing unit, where an ingredient liquid stored in the container is mixed with water for preparing the beverage serving.

Most multi-servings beverage dispensing systems are further adapted to receive different types of containers, each type of container having its own specific ingredient or combination of ingredients. While very attractive for the user, there is also an increased risk of contamination of a currently dispensed beverage using an ingredient liquid stored in a container, by another ingredient liquid (stored in another container) used for a previously dispensed beverage.

Effective cleaning of such multi-servings beverage dispensing systems is of great importance, to guarantee a constant quality of the dispensed beverages and to avoid potential health issues for the users. However, existing cleaning procedures generally have the following shortcomings: the cleaning procedure is implemented only once in a while and not after each beverage dispensing, the cleaning procedure requires the intervention of the user, etc.

Furthermore, even for water filtration systems that do not involve flavoring, significant amounts of chlorine and other substances used in tap water to ensure its safety are removed by the filtration process. While this improves the taste and quality of the filtered water, it also creates conditions where bacteria, mold, or fungi could develop more easily in the system.

EP 4 303 172 A1 discloses a container, a cap and a multi-servings beverage dispensing system. WO 2022/169569 A1 discloses post-mix beverage dispensing systems and methods for sanitising the mixing area thereof. US 2 777 452 A discloses a cleaning apparatus for beer dispensing systems.

Therefore, there is a need for a new self-cleaning multi-servings beverage dispensing system.

### SUMMARY

According to a first aspect, the present disclosure provides a self-cleaning multi-servings beverage dispensing system adapted for preparing and serving a beverage. The system comprising a container engaging inlet port adapted for removably engaging a container storing an ingredient liquid. The system comprises a liquid extraction component slidably movable between a retracted position and an extended position. The liquid extraction component is not in contact with the ingredient liquid when the container is engaged in the container engaging inlet port and the liquid extraction component is in the retracted position. The liquid extraction component is in contact with the ingredient liquid when the container is engaged in the container engaging inlet port and the liquid extraction component is in the extended position. The system comprises an actuator adapted for moving the liquid extraction component between the retracted position and the extended position. The system comprises an ingredient pump for extracting at least some of the ingredient liquid from the container via the liquid extraction component when the liquid extraction component is in the extended position and the container is engaged in the container engaging inlet port, and transferring the extracted ingredient liquid from the liquid extraction component to a mixing unit. The system comprises a water tank for storing water and a water pump for transferring water from the water tank to the mixing unit. The system comprises the mixing unit for receiving and mixing the ingredient liquid transferred to the mixing unit and the water transferred to the mixing unit. The system comprises a mixing unit outlet for pouring a content of the mixing unit. The system comprises a cleaning pump for transferring cleaning water from the water tank to the liquid extraction component. The system comprises a controller comprising electronic means for controlling operations of the beverage dispensing system. The controller is adapted to perform a self-cleaning procedure by sending commands to the cleaning pump, the water pump and the ingredient pump to execute at least one of the following functionalities. An air cleaning functionality comprising a transfer of air by the ingredient pump through the liquid extraction component to the mixing unit, the air being sucked into the liquid extraction component via the liquid extraction inlet. A water cleaning functionality comprising a transfer of water by the water pump from the water tank to the mixing unit, a transfer of cleaning water by the cleaning pump from the water tank to the liquid extraction component, and a transfer of the cleaning water by the ingredient pump from the liquid extraction component to the mixing unit.

In a particular aspect, the air cleaning functionality further comprises a transfer of water by the water pump from the water tank to the mixing unit.

In another particular aspect, the liquid extraction component further comprises a liquid extraction outlet adapted for transferring any of the ingredient liquid, the cleaning water and the air to the mixing unit.

In still another particular aspect, the liquid extraction component further comprises a cleaning water inlet adapted for receiving the cleaning water from the cleaning pump.

In yet another particular aspect, the cleaning pump is in direct or indirect liquid communication with the water pump.

In another particular aspect, the beverage dispensing system further comprises a water filter, the water pump being in liquid communication with the water tank and the water filter, the mixing unit being in liquid communication with the water filter, and the cleaning pump being in liquid communication with the water filter.

In still another particular aspect, performing the self-cleaning procedure comprises repeating N iterations of: an execution of the air cleaning functionality followed by an execution of the water cleaning functionality or an execution of the water cleaning functionality followed by an execution of the air cleaning functionality, N being an integer greater than 0.

In yet another particular aspect, performing the self-cleaning procedure comprises an execution of the air cleaning functionality, followed by a predetermined time interval during which the cleaning pump, the water pump and the ingredient pump are inactive, followed by an execution of the water cleaning functionality; or an execution of the water cleaning functionality, followed by a predetermined time interval during which the cleaning pump, the water pump and the ingredient pump are inactive, followed by an execution of the air cleaning functionality.

In another particular aspect, the self-cleaning procedure is performed after a beverage has been prepared and served, and the liquid extraction component has been moved in the retracted position by the actuator through a command sent by the controller to the actuator. In a particular embodiment, the self-cleaning procedure is repeated at least one time after a pre-determined time interval, if a new beverage has not been prepared and served during the time interval. In another particular embodiment, the self-cleaning procedure is adapted based on the type of beverage being prepared and served. For instance, the container further comprises a tag storing data for performing the self-cleaning procedure, the beverage dispensing system further comprises a contactless data reader adapted for reading the data stored by the tag, and the controller uses the data read by the contactless data reader from the tag to perform the self-cleaning procedure.

In still another particular aspect, during the self-cleaning procedure, the mixing unit outlet pours any liquid present in the mixing unit.

In yet another particular aspect, performing the self-cleaning procedure by the controller comprises determining time of operation and speed of operation for the cleaning pump, the water pump and the ingredient pump.

In another particular aspect, the system further comprises an air pump, the controller being further adapted to perform a drying procedure by sending commands to the air pump, the cleaning pump and the ingredient pump to circulate air in the cleaning pump, the liquid extraction component, the ingredient pump and the mixing unit. In a particular embodiment, the air pump is connected to a liquid conduit connecting the cleaning pump and the mixing unit to the water pump.

In still another particular aspect, the container stores a cleaning liquid, the cleaning liquid being circulated into the liquid extraction component, the ingredient pump, the mixing unit and the mixing unit outlet when performing a beverage dispensing procedure.

In yet another particular aspect, the system further comprises an Ultraviolet-C (UV-C) module, UV-C radiations emitted by the UV-C module covering an area of the beverage dispensing system where one or more components of the beverage dispensing system are located. In a particular embodiment, at least one of the following components is located in the area covered by the UV-C radiations: the cleaning pump, the ingredient pump, the mixing unit, the water pump and the liquid extraction component.

### BRIEF DESCRIPTION OF THE DRAWINGS

Embodiments of the disclosure will be described by way of example only with reference to the accompanying drawings, in which:
Figure 1 is a top view of a beverage dispensing system;
Figure 2 is a front view of the beverage dispensing system of Figure 1;
Figure 3 is a perspective view comprising additional components of the beverage dispensing system of Figures 1 and 2;
Figure 4 is a functional view of interactions between components of the beverage dispensing system of Figures 1 and 2;
Figure 5 is another functional view of interactions between components of the beverage dispensing system of Figures 1 and 2;
Figure 6 is a schematic representation of a liquid extraction component of the beverage dispensing system of Figures 1-3 adapted for implementing a self-cleaning procedure;
Figures 7, 8, 9 and 10 are schematic representations of the beverage dispensing system of Figures 1-3 adapted for implementing the self-cleaning procedure;
Figure 11 is a schematic representation of the beverage dispensing system of Figure 7 further comprising an air pump; and
Figure 12 is a schematic representation of the beverage dispensing system of Figure 7 further comprising an Ultraviolet-C (UV-C) module.

### DETAILED DESCRIPTION

The foregoing and other features will become more apparent upon reading of the following non-restrictive description of illustrative embodiments thereof, given by way of example only with reference to the accompanying drawings.

The present disclosure aims at providing a compelling alternative to bottled water and other water-based ready-to-drink beverages, by disclosing a new multi-servings beverage dispensing system with self-cleaning capabilities. The beverage dispensing system is meant to offer a convenient, reliable, and cost-effective beverage solution to consumers' beverage needs. The beverage dispensing system is adapted to produce filtered water, as well as other unique beverages, through a container adapted for storing a liquid and allowing extraction of the liquid on-demand. For example, the container stores a liquid concentrate, which is mixed (by the beverage dispensing system) with filtered water, to produce a beverage. Instead of filtered water, the liquid concentrate may be mixed with any of the following: still (not sparkling) water, flavored water, enhanced water, infused water, and an alcoholic drink.

The beverage dispensing system is adapted to offer the following functionalities and benefits. Providing on-demand filtered water, by filtering the eventual bad taste, unhealthy contaminants or particles present in water. Providing on-demand custom beverages, by preparing a variety of appealing beverages, produced with filtered water, the consumer having the option to control the level of infusion of each beverage. Reducing carbon dioxide (CO2) emissions, by avoiding transport of heavy bottled beverages to the point of consumption. Saving space, by avoiding stockage of voluminous beverage containers (e.g. in a fridge at home or an the office). Providing health benefit, resulting from more convenient and improved hydration options, including better concentration. Providing distribution benefit, the containers being light and valuable enough to be shipped directly to consumers at low shipping costs.

Furthermore, the beverage dispensing system implements a self-cleaning procedure after each beverage dispensing. The self-cleaning procedure is instantaneous, entirely automated and smoothly integrated with the beverage dispensing phase (the self-cleaning procedure relies on a small number of standard and cost-effective components dedicated to the cleaning phase).

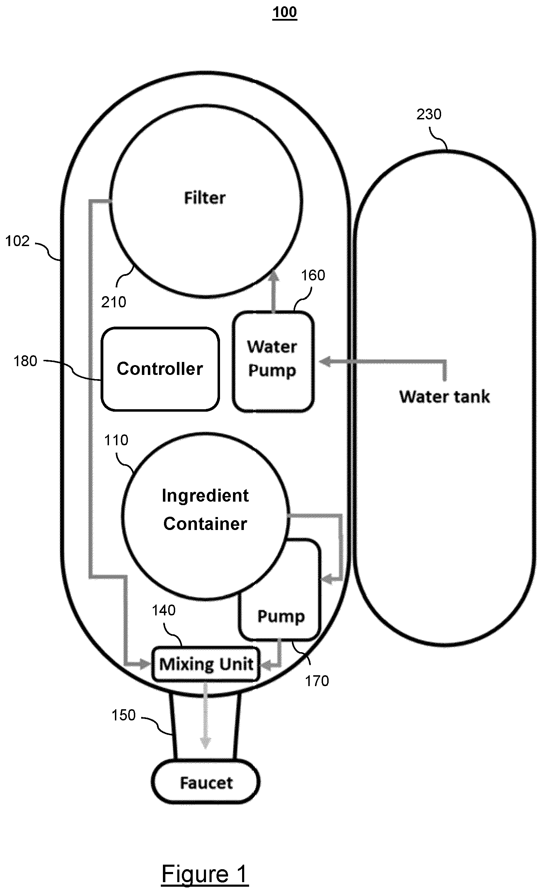

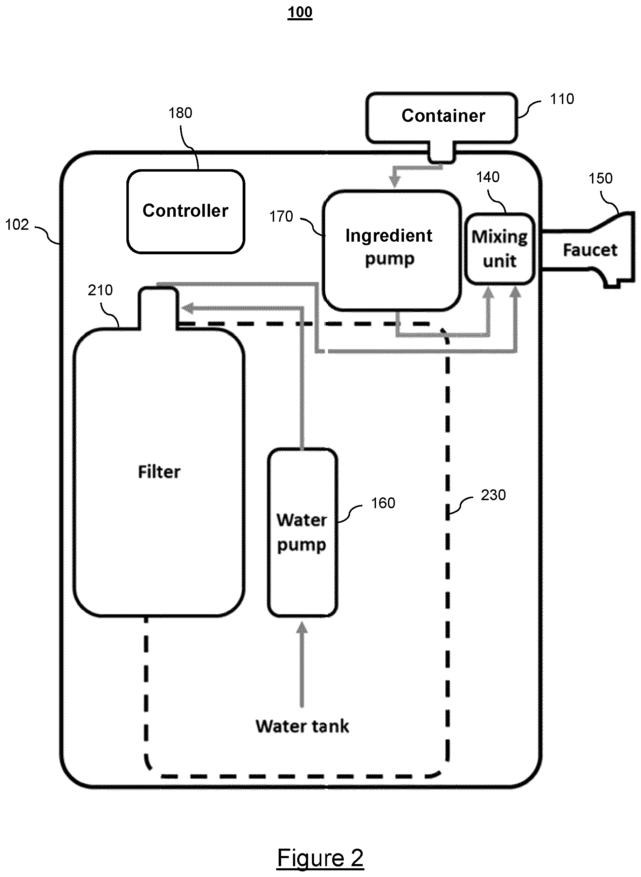

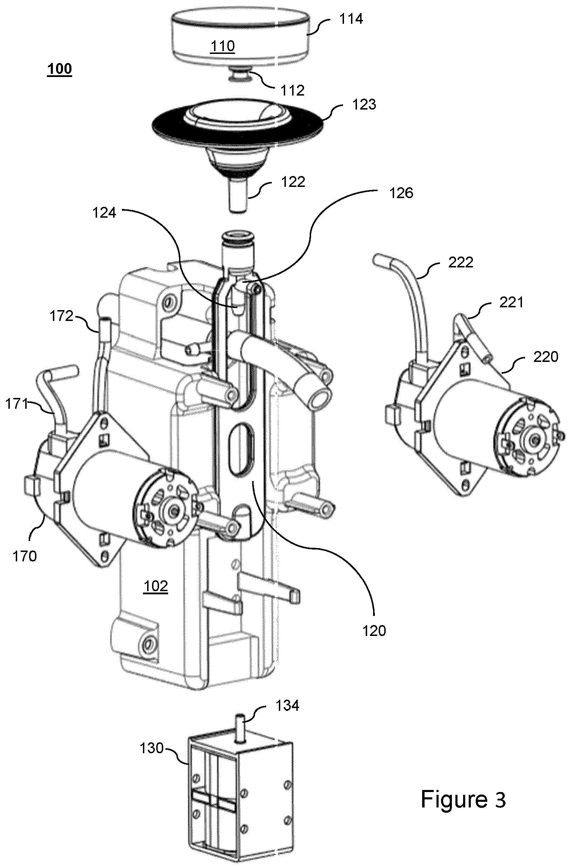

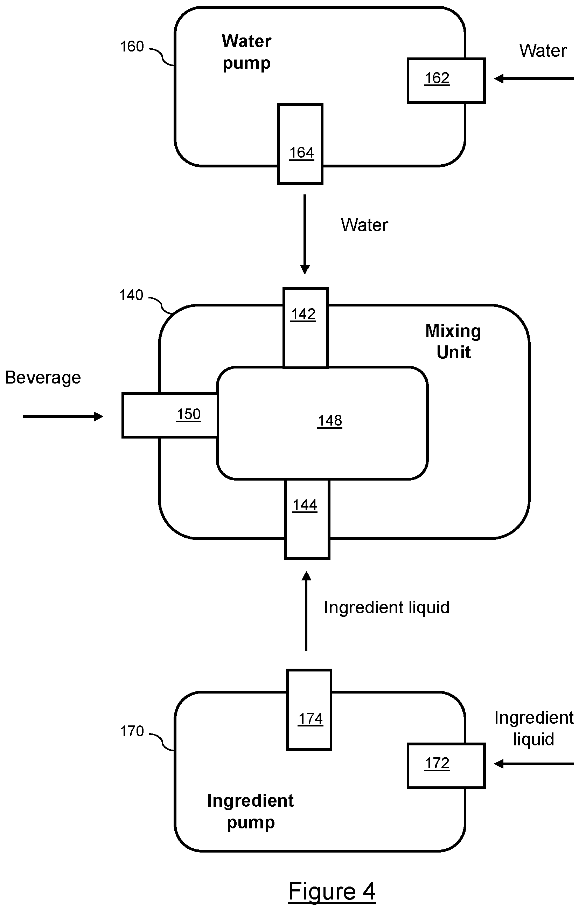

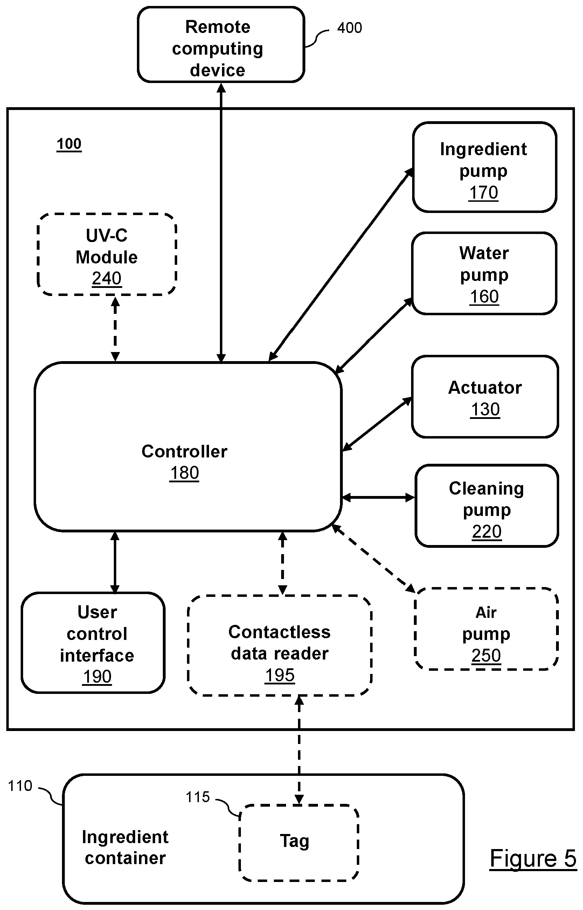

Reference is now made concurrently to Figures 1, 2, 3, 4 and 5. Figures 1 and 2 are respective top and front views of a beverage dispensing system 100. Figure 3 is a perspective view comprising additional components of the beverage dispensing system 100 not represented in Figures 1 and 2 for simplification purposes. Figures 4 and 5 are functional views of interactions between components of the beverage dispensing system 100. The self-cleaning functionalities of the beverage dispensing system 100 are not illustrated in Figures 1-4 and will be detailed later in the description.

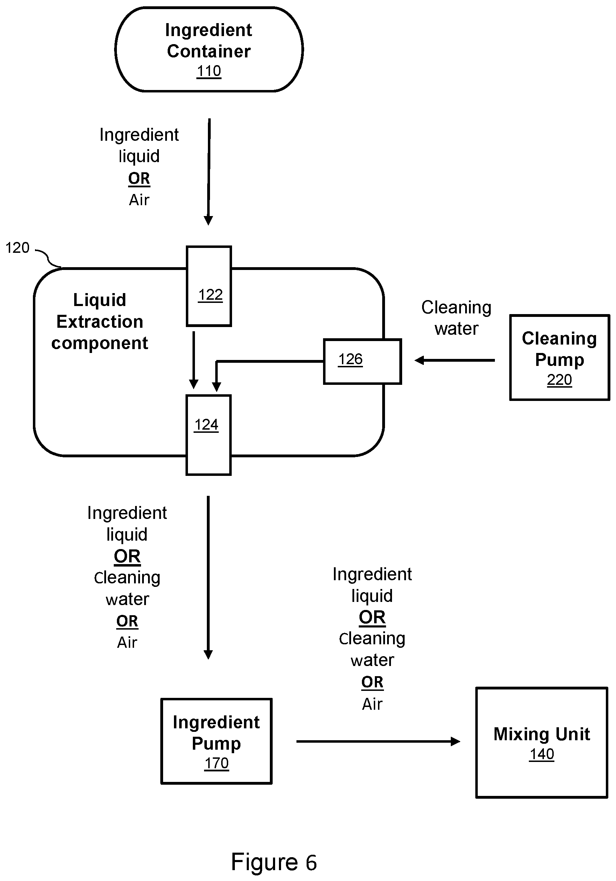

For simplification purposes, Figures 1 and 2 represent the beverage dispensing system 100 without components used for the self-cleaning procedure, while Figures 3 and 5 introduce the components used for the self-cleaning procedure (which will be detailed later in relation to Figures 6-12).

The beverage dispensing system 100 comprises a housing 102 (illustrated in Figures 1, 2 and 3), a water tank 230 (illustrated in Figures 1 and 2), a water pump 160 (illustrated in Figures 1, 2, 4 and 5), a water filter 210 (illustrated in Figures 1 and 2), an ingredient container 110 (illustrated in Figures 1, 2, 3 and 5), an ingredient pump 170 illustrated in Figures 1, 2, 3, 4 and 5), a mixing unit 140 (illustrated in Figures 1, 2 and 4), a mixing unit outlet 150 (illustrated as a faucet in Figures 1, 2 and also illustrated in Figure 4), a controller 180 (illustrated in Figures 1, 2 and 5), a user control interface 190 (illustrated in Figure 5), a liquid extraction tube 120 (illustrated in Figure 3) and an actuator 130 (illustrated in Figures 3 and 5).

The beverage dispensing system 100 is multi-servings and is adapted for preparing and dispensing a custom beverage. The beverage is prepared by mixing water contained in the water tank 230 and a liquid contained in the ingredient container 110. Examples of liquids contained in the ingredient container 110 have been provided previously. The container 110 is referred to as the ingredient container, since the liquid contained in the container 110 is an ingredient which is mixed with the liquid (generally water) contained in the water tank 230, to dispense a customized beverage (e.g a beverage having a customized flavor due to the flavor of the ingredient). Thus, the liquid contained in the ingredient container 110 will also be referred to as the ingredient liquid. Furthermore, as mentioned previously, the water tank 230 is not limited to containing water, but may also contain an alcoholic beverage, etc. Thus, although the liquid contained in the water tank 230 is referred to as water in the rest of the description, the beverage dispensing system 100 is adapted to process other types of liquids contained in the water tank 230.

The arrows in Figures 1 and 2 schematically illustrate the respective flows of water and ingredient liquid between components of the beverage dispensing system 100. Similarly, the arrows in Figure 4 schematically illustrate the respective flows of water, ingredient liquid and beverage involving the water pump 160, the ingredient pump 170 and the mixing unit 140. Additional flows related to the self-cleaning functionalities will be detailed later in the description.

The water tank 230 is generally a removable and refillable water tank, the housing 102 being adapted for receiving and removing the water tank 230, as is well known in the art (e.g. in a manner similar to water tanks used for pod based coffee infusers).

In an exemplary implementation, a water tank engaging port (not represented in the Figures for simplification purposes) is mounted on the housing 102 and connected in liquid communication with a water pump inlet 162 (schematically represented in Figure 4) of the water pump 160. The water tank 230 comprises a bottom port (not represented in the Figures for simplification purposes) configured for saleably and removably engaging the water tank engaging port on the housing 102. The removable water tank 230 also comprises a reclosable top opening for allowing a user to fill the water tank 230 with water. Thus, the water contained in the water tank 230 is made available to the beverage dispensing system 100 via the water pump 160. Alternatively, the water tank 230 is directly connected to a municipal water network.

The water pump 160 is mounted inside the housing 102. The water pump 160 comprises the previously mentioned water pump inlet 162 in liquid communication with the water source 230 via the previously mentioned water tank engaging port. The water pump 160 also comprises a water pump outlet 164 (schematically represented in Figure 4) in liquid communication with a mixing unit water inlet 142 (schematically represented in Figure 4) of the mixing unit 140. This configuration is used when the beverage dispensing system 100 does not comprise the water filter 210.

Optionally, the beverage dispensing system 100 further comprises the water filter 210 in serial liquid communication between the water pump 160 and the mixing unit 140 (more specifically in serial liquid communication between the previously mentioned water pump outlet 164 of the water pump 160 and the previously mentioned mixing unit water inlet 142 of the mixing unit 140).

In an exemplary implementation, the water filter 210 is a user selectively removable water filter, and the beverage dispensing system 100 comprises a removable filter mounting arrangement for removably receiving the water filter 210. The filter mounting arrangement is generally located along a rear portion of the housing 102. Thus, after a predetermined usage or volume of filtered water, the user may conveniently proceed with replacing the removable water filter 210 with a new one. The spent removable water filter may be appropriately recycled or disposed of according to the manufacturer instructions.

The ingredient container 110 is a removable, single-use or refillable ingredient container. The ingredient container 110 comprises a casing 114 (represented in Figure 3) having a sufficient capacity for storing ingredient liquid for one serving or for multi-servings of the custom beverage served by the beverage dispensing system 100. The ingredient container 110 (in particular the casing 114) can be made of a recyclable material or material(s).

In an exemplary implementation, the casing 114 comprises a container outlet port 112 (represented in Figure 3) through which the liquid stored inside the casing 114 is extracted.

The beverage dispensing system 100 further comprises a container engaging inlet port (not represented in the Figures for simplification purposes). The container engaging inlet port is generally mounted along an upper portion of the housing 102. The container engaging inlet port is adapted for removably engaging the ingredient container 110. The respective design of a container engaging inlet port and corresponding ingredient container 110 allowing removable engagement of the ingredient container 110 into the container engaging inlet port is well known in the art of beverage dispensing systems.

In an exemplary implementation, the container engaging inlet port defines a container port engaging cavity (not represented in the Figures for simplification purposes) extending at least slightly inwardly relative to the upper portion of the housing 102. The container port engaging cavity is suitably sized and configured for removably engaging therein in a snug-fit relation the container outlet port 112 of a suitable ingredient container 110 containing an ingredient liquid. The container engaging inlet port further defines an inlet port guide opening (not represented in the Figures for simplification purposes) extending coaxially centrally and inwardly relative to an innermost surface portion of a container port engaging cavity.

The liquid extraction tube 120 comprises a substantially elongated tubular member defining a liquid extraction inlet 122 (represented in Figure 3), a liquid extraction outlet 124 (represented in Figure 3), and a liquid extraction passageway extending there between (not represented in the Figures for simplification purposes). In an exemplary implementation, the liquid extraction tube 120 is a plunger. Adaptation of the liquid extraction tube 120 to the self-cleaning functionalities will be detailed later in the description.

The liquid extraction tube 120 is slidably mounted inside the housing 102, so as to be slidably movable between a retracted position and an extended position. In the retracted position, the liquid extraction inlet 122 is retracted within the container engaging inlet port. For example, in the previously mentioned implementation of the container engaging inlet port, the liquid extraction inlet 122 is retracted within the previously mentioned inlet port guide opening of the container engaging inlet port. In the extended position, an end portion of the liquid extraction tube 120, including the liquid extraction inlet 122, protrudes from the container engaging inlet port.

The actuator 130 is mounted inside the housing 102.The actuator 130 comprises an actuator drive member 134 (represented in Figure 3). The actuator drive member 134 is connected to the liquid extraction tube 120, and is adapted for moving the liquid extraction tube 120 between its retracted position and its extended position.

The actuator 130, in cooperation with the liquid extraction tube 120 and the container engaging inlet port, are suitably sized and configured such that, when the ingredient container 110 is engaged in the container engaging inlet port and the liquid extraction tube 120 is in the retracted position, the liquid extraction inlet 122 does not contact the ingredient container 110. For example, if the ingredient container 110 comprises the container outlet port 112, the liquid extraction inlet 122 does not contact the container outlet port 112. When the liquid extraction tube 120 is in the extended position, the liquid extraction inlet 122 longitudinally engages through the ingredient container 110, so as to be in liquid communication with the interior of the ingredient container 110. For example, if the ingredient container 110 comprises the container outlet port 112, the liquid extraction inlet 122 longitudinally engages through the container outlet port 112.

In the implementation illustrated in Figure 3, the liquid extraction inlet 122 is a detachable member of the liquid extraction component 120 for facilitating cleaning of the liquid extraction inlet 122. The liquid extraction inlet 122 is integrated to an upper flexible extension 123 adapted to adhere to the ingredient container 110. The flexible extension 123 prevents leaking of the ingredient liquid stored in the ingredient container 110 when the liquid extraction inlet 122 longitudinally engages through the ingredient container 110 when moved in the extended position by the actuator 130. However, other implementations of the liquid extraction inlet 122 (e.g. not detachable from the liquid extraction component 120, without the upper flexible extension 123, etc.) are also within the scope of the present disclosure.

The ingredient pump 170 is mounted inside the housing 102. The ingredient pump 170 comprises an ingredient pump inlet 172 (represented in Figures 3 and 4) in liquid communication with the liquid extraction outlet 124 of the liquid extraction tube 120. A liquid conduit 171 (represented in Figure 3) interconnects the ingredient pump 170 with the mixing unit 140 (not represented in Figure 3 for simplification purposes). The ingredient pump 170 also comprises an ingredient pump outlet 174 (schematically represented in Figure 4) in liquid communication with a mixing unit ingredient inlet 144 (schematically represented in Figure 4) of the mixing unit 140.

In an exemplary implementation, the ingredient pump 170 is a peristaltic pump. Peristaltic pumps are well known in the art, particularly in medical contexts. Peristaltic pumps generally comprise a flexible and resilient liquid conduit in liquid communication between the ingredient pump inlet 172 and ingredient pump outlet 174. Peristaltic pumps further comprise a rotating actuator applying a cyclical pressure in a direction along a portion of the flexible conduit, so as to force a liquid flow in the ingredient liquid present in the conduit.

Similarly to medical contexts, the peristaltic pump is used in the context of the present beverage dispensing system 100 for its capability to controllably deliver a relatively small and precise flow of ingredient liquid, as well as for its ease of cleaning (since there is no turbine, piston or moving parts in contact with the pumped liquid).

The mixing unit 140 is mounted inside the housing 102. The mixing unit 140 comprises an internal mixing unit chamber 148 (schematically represented in Figure 4), the mixing unit water inlet 142, the mixing unit ingredient inlet 144. The mixing unit 140 further comprises the mixing unit outlet 150 (schematically represented in Figure 4) connected to the mixing unit 140 and extending forward from a front surface portion of the housing 102. Figures 1 and 2 illustrate an exemplary implementation of the mixing unit outlet 150 consisting of a faucet.

Each one of the mixing unit water inlet 142, mixing unit ingredient inlet 144 and mixing unit outlet 150, is in liquid communication with the interior of the mixing unit chamber 148. The mixing unit outlet 150 comprises an output opening that is suitably adapted for pouring the content of the mixing unit chamber 148 into an underlying user cup or bottle.

The controller 180 is mounted inside the housing 102. The controller 180 is suitably operatively connected and adapted for operatively controlling the water pump 160, the ingredient pump 170, and the actuator 130. Figure 5 provides a schematic representation of the interactions of the controller 180 with other components (e.g. the water pump 160, the ingredient pump 170 and the actuator 130) of the beverage dispensing system 100.

Interactions with a cleaning pump 220, optionally with an Ultraviolet-C (UV-C) module 240 and optionally with an air pump 250 are also represented in Figure 5. These three components are related to the self-cleaning functionalities and will be detailed later in the description.

In an exemplary implementation, the controller 180 consists of any suitable electronic microcontroller. The controller 180 comprises at least some of the following components (not represented in Figure 5 for simplification purposes): one or more processor, memory, interface inputs and outputs (I/O), and communication capabilities that are generally found in known beverage dispensing systems. Examples of communication capabilities comprise a wireless communication interface (e.g. Bluetooth^{®}, Bluetooth Low Energy (BLE), Wi-Fi, Near Field Communication (NFC), etc.), a wired communication interface (e.g. Ethernet, etc.), or a combination thereof.

The user control interface 190 (schematically represented in Figure 5, but not represented in Figures 1 and 2 for simplification purposes) is mounted on the housing 102 and is in operative communication with the controller 180. The user control interface 190 comprises at least one of a button and Light Emitting Diodes (LEDs), a touch actuated user interface located on the housing 102, a voice actuated user interface mounted inside the housing 102, a remote user interface accessible through a mobile application or equivalent executed on a remote computing device 400 and communicating with the controller 180 through a wired or wireless communication link, or a combination thereof. The user control interface 190 may also comprise a display (e.g. a basic screen, a touch screen allowing interactions with the user, etc.) for displaying information related to the operations of the beverage dispensing system 100.

In an exemplary implementation, the user control interface 190 (comprising buttons and LEDs) is partly accessible along a front surface portion of the housing 102 and the mixing unit outlet (e.g. faucet) 150.

The user control interface 190 and the controller 180 are suitably adapted and configured for at least enabling the user to select a custom beverage, and actuate a start command, either simultaneously or consecutively with the selection of the custom beverage, so as to efficiently mix and deliver the desired custom beverage through the mixing unit outlet (e.g. faucet) 150.

Additional information is usually selectable by the user through the user control interface 190 such as, but not limited to, a desired volume of beverage, a desired intensity of flavor, selecting to be simply served water, etc.

Functionalities of the user control interface 190 may be accomplished (at least partially) through any suitable remote communication arrangements and software applications in cooperative operational relation with the controller 180 and/or user control interface 190. For this purpose, a remote computing device 400 (schematically represented in Figure 5) interfaces with the controller 180 and/or user control interface 190 via the communication interface of the controller 180. Examples of remote computing devices 400 comprise a smartphone, a tablet, a laptop, a table top computer, etc.

Following is an exemplary sequence of operations of the beverage dispensing system 100 managed via the user control interface 190 and the controller 180. When the beverage dispensing system 100 is powered on, provided with water in the water tank 230, and a user selected ingredient container 110 is engaged in the container engaging inlet port on the housing 102, a user may position a cup or bottle under the mixing unit outlet (e.g. faucet) 150, select a custom beverage through the user control interface 190, and actuate a start command of the beverage dispensing system 100 (the selection and actuation are performed either consecutively or simultaneously).

Following the start command, the controller 180 automatically determines a suitable time and speed of operation of the water pump 160, and a suitable time and speed of operation of the ingredient pump 170, according to the custom beverage selected by the user. The controller 180 also automatically determines suitable operating parameters of the actuator 130 (e.g. direction of movement, suitable time and speed of operation for each movement, etc.). Once the determinations are completed, the controller 180 applies corresponding commands to both pumps 160 and 170, as well as to the actuator 130, so as to efficiently mix and deliver the desired custom beverage through the mixing unit outlet (e.g. faucet) 150.

Thus, a user may advantageously select to be served a differently flavored custom beverage as desired, by simply engaging in the container engaging inlet port of the beverage dispensing system 100 a removable ingredient container 110 corresponding to the desired flavor. Alternatively, the user may simply select to be served plain water of the water tank 230 (in which case the ingredient pump 170 is not activated by the controller 180).

Optionally, the beverage dispensing system 100 further comprises liquid flow measuring means capable of providing a liquid flow measure of the ingredient liquid entering the mixing unit 140 through the mixing unit ingredient inlet 144.

In a first exemplary implementation, the liquid flow measuring means consists of a time based liquid measuring algorithm executed by the controller 180, based on the operating time of the ingredient pump 170 and a predetermined viscosity value of the ingredient liquid in the ingredient container 110.

In a second exemplary implementation, the liquid flow measuring means consists of a liquid flow meter (not represented in the Figures for simplification purposes) in operative communication with the controller 180. The liquid flow meter measures the flow of liquid circulating from the ingredient container 110 towards the mixing unit 140. For example, the liquid flow meter is coupled in serial liquid communication between the liquid extraction inlet 122 of the liquid extraction tube 120 and the mixing unit 140. The controller 180 instantly actuates the ingredient pump 170 at a predetermined speed of operation following the start command, and determines the remaining time and speed of operation of the ingredient pump 170, based on the real time liquid flow measurements provided by the liquid flow meter. Thus, the estimated ingredient liquid volume actually delivered into the mixing unit 140 takes into account the current viscosity, fluidity and/or temperature of the ingredient liquid contained in the removable ingredient container 110.

Optionally, consumer data, operational data, statistics and/or maintenance information are exchanged between the controller 180 and a customer database on a remote computing device 400 (e.g. a server), via the communication capabilities provided by the controller 180.

Optionally, the beverage dispensing system 100 comprises a contactless data reader 195 (schematically represented in Figure 5, but not represented in Figures 1 and 2 for simplification purposes) in operative communication with the controller 180 (or directly integrated to the controller 180). The contactless data reader 195 allows the controller 180 to read data from the ingredient container 110 engaged in the container engaging inlet of the beverage dispensing system 100. Optionally, the ingredient container 110 comprises a component 115 (schematically represented in Figure 5) capable of storing the data and allowing reading of the data by the contactless data reader 195. The component 115 will be referred to as a tag in the following.

In an exemplary implementation, the contactless data reader 195 comprises a barcode reader or a quick response (QR) code reader. In an exemplary configuration, the reader is mounted on the housing 102 and is substantially adjacent to the container engaging inlet port. A compatible bar code tag 115 or QR code tag 115 is integrated to the ingredient container 110. In an exemplary configuration, the tag 115 is located along a plane portion of the ingredient container 110. The tag 115 is further positioned so as to allow reading by the bar code reader or QR code reader mounted on the housing 102.

In an alternative or complementary exemplary implementation, the contactless data reader 195 comprises a Radio Frequency Identification (RFID) reader. A corresponding read or read/write RFID tag 115 is integrated to the ingredient container 110.

Examples of data stored by the tag 115 comprise at least some of the following information related to the ingredient liquid present in the ingredient container 110: type of ingredient liquid, flavor, viscosity, density, temperature, remaining level of ingredient liquid in the ingredient container 110, etc. As mentioned previously, the contactless data reader 195 integrated into the beverage dispensing system 100 is capable of reading the information stored via the tag. Optionally, the tag 115 provides the capability of modifying the information stored by the tag 115. In this case, the contactless data reader 195 is also capable of transferring data to the tag 115, to modify at least some of the information stored by the tag 115.

The information collected from or exchanged with the tag 115 can be used by the controller 180 to more accurately determine the appropriate time and speed of operation of the ingredient pump 170, to simplify the choices or information needed to be entered by the user via the user control interface 190, etc. Furthermore, some of the information collected from or exchanged with the tag 115 can be displayed on the display of the user control interface 190 (when the user control interface 190 comprises one).

Information used for the implementation of the self-cleaning procedure, which will be detailed later in the description, can also be stored by the tag 115.

Optionally, the controller 180 implements a machine learning algorithm (e.g. a neural network) to make decision(s) based on (at least) some of the information stored by the tag 115. For example, in the case of a neural network, a predictive model of the neural network is stored in the memory of the controller 180. The predictive model has been generated during a training phase, using a large amount of training data. When ready, the predictive model is transmitted to the controller 180 via its communication interface and stored in its memory. Using the predictive model, the neural network is capable of predicting the most effective time and / or speed of operation of the ingredient pump 170 based on relevant information read from the tag 115 (e.g. at least some of the type of ingredient, viscosity, density, temperature, remaining level of ingredient liquid, etc.).

The same (or a complementary) predictive model can also be used for predicting the most effective operating parameters for the implementation of the self-cleaning procedure, which will be detailed later in the description.

In an alternative implementation, the tag 115 is comprised in a cap (which will be detailed later in the description) for the ingredient container 110.

Although not represented in the Figures for simplification purposes, an electrical power source powers the components of the beverage dispensing system 100 which need power to operate (the water pump 160, the ingredient pump 170, the controller 180, the user control interface 190, etc.).

The electrical power source may be any suitable electrical power source such as, for example, a 110 Volts Alternative Current (AC) outlet providing electrical power to the components of the system 100 through a conventional control switch and extension cord arrangement, a rechargeable battery mounted inside the housing 102, or a combination thereof.

Furthermore, suitable tubing, molded liquid networks, or a combination thereof, may provide the liquid communications between the various components of the beverage dispensing system 100 as described above.

Details of the implementation of the ingredient container 110 are out of the scope of the present disclosure. US patent application 18/063,156 (published as US 20240010421A1) provides several exemplary implementations of the ingredient container 110.

### SELF- CLEANING PROCEDURE

Reference is now made concurrently to Figures 5, 6, 7, 8, 9 and 10, where Figures 6, 7, 8, 9 and 10 schematically represent the beverage dispensing system 100 (previously described in relation to Figures 1-5) being adapted for performing the self-cleaning procedure after each serving of a beverage.

The self-cleaning procedure allows to clean and purge components of the beverage dispensing system 100, to avoid the risks of having ingredient liquid remaining in the beverage dispensing system 100 (more specifically, remaining in other components than the ingredient container 110) between two servings of a beverage. The self-cleaning procedure also prevents microbiological development in the beverage dispensing system 100.

The water tank 230, water pump 160, water filter 210, ingredient container 110, actuator 130, ingredient pump 170, mixing unit 140, mixing unit outlet 150 (illustrated as a faucet in the Figures) and controller 180 have been described previously in relation to Figures 1-5.

The beverage dispensing system 100 further comprises the cleaning pump 220 (previously introduced in relation to Figures 3 and 5) for performing the self-cleaning procedure. In an exemplary implementation, the cleaning pump 220 is a peristaltic pump, with characteristics similar to those of the ingredient pump 170. A liquid conduit 221 (represented in Figure 3 only for simplification purposes) interconnects the cleaning pump 220 with the water filter 210, either directly or indirectly through a water conduit connecting the water filter 210 to the mixing unit 140. If the water filter 210 is not present, the liquid conduit 221 interconnects the cleaning pump 220 with the water pump 160, through a water conduit connecting the water pump 160 to the mixing unit 140. In all of the previously described configurations, the cleaning pump 220 is in direct or indirect liquid communication with the water pump 160, to transfer liquid from the water tank 230 to the cleaning pump 220 through the water pump 160 (and through the water filter 210 if present). The liquid conduit 221 may also be directly connected to the water tank 230.

The liquid extraction component 120 is adapted to perform the self-cleaning procedure, by being in liquid communication with the cleaning pump 220. More specifically, the liquid extraction component 120 comprises a cleaning water inlet 126 (represented in Figure 3 and schematically represented in Figure 6) in liquid communication with the cleaning pump 220, via a liquid conduit 222 (represented in Figure 5 but not represented in Figure 6 for simplification purposes). The liquid extraction component 120 is designed to let ingredient liquid or air flow from the liquid extraction inlet 122 to the liquid extraction outlet 124; and to allow cleaning water flow from the cleaning water inlet 126 to the liquid extraction outlet 124.

Figure 3 illustrates an implementation where the cleaning water inlet 126 extends horizontally and the liquid extraction outlet 124 extends vertically. However, other geometric configurations are possible, to adapt to the respective positions and designs of other components of the beverage dispensing system 100. For example, in another configuration not represented in the Figures, the cleaning water inlet 126 and the liquid extraction outlet 124 extend horizontally.

More generally, the design of the liquid extraction component 120 is not limited to the implementation described in the present disclosure and illustrated in Figure 3. Any design of the liquid extraction component 120 allowing to perform the beverage dispensing and the self-cleaning procedures described in the following paragraphs is within the scope of the present disclosure.

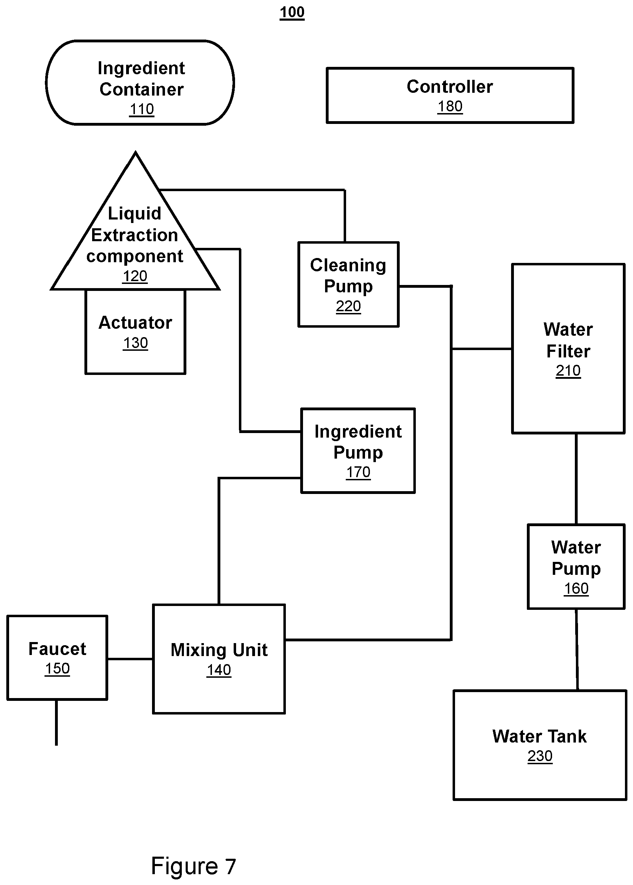

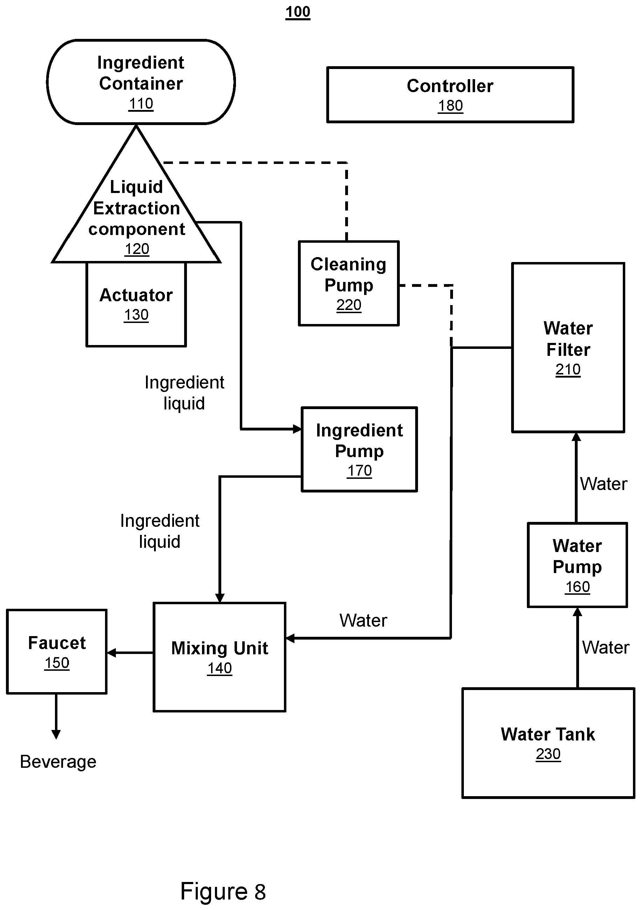

Liquid conduits interconnecting the water tank 230 and the water pump 160, the water pump 160 and the water filter 210, the water filter 210 and the mixing unit 140, the water filter 210 and the cleaning pump 220, the cleaning pump 220 and the liquid extraction component 120, the liquid extraction component 120 and the ingredient pump 170, the ingredient pump 170 and the mixing unit 140, the mixing unit 140 and the faucet 150, are schematically represented in full lines in Figure 7. In Figures 8, 9 and 10, the liquid conduits schematically represented in Figure 7 are represented with dashed lines when liquid is circulating therethrough and with arrows indicating the direction of circulation when fluid (liquid or air) is circulating therethrough.

The self-cleaning procedure is performed each time a beverage dispensing occurs, at the end of the beverage dispensing procedure, so that the water used for the self-cleaning process is added to the beverage dispensed through the faucet 150 (e.g. in a glass or bottle placed under the faucet 150). Following is a description of the beverage dispensing and self-cleaning procedures, which are controlled by the controller 180.

The controller 180 executes a control software in charge of implementing the aforementioned procedures, by sending commands to the various components of the beverage dispensing system 100 under its control. The execution of the control software and sending of the commands will be referred to as the controller 180 commanding the various components to perform their respective tasks.

Referring more specifically to Figures 3, 5 and 8, following is a simplified description of the beverage dispensing procedure (this procedure has already been described in detail previously). The following actions are taken when executing the beverage dispensing procedure.

Action 1: the controller 180 commands the actuator 130 to move the liquid extraction component 120 upwardly inside the ingredient container 110, in the extended position of the liquid extraction component 120. In its extended position, the liquid extraction component 120 is in contact with the ingredient liquid stored in the ingredient container 110.

Action 2: the controller 180 commands the water pump 160 to transfer water from the water tank 230 to the mixing unit 140 through the water filter 210. As already mentioned previously, in an alternative configuration, the water filter 210 is not present and the water is transferred directly from the water tank 230 to the mixing unit 140 (the water pump 160 connects directly the water tank 230 to the mixing unit 140).

Action 3: the controller 180 commands the ingredient pump 170 to extract (by exerting a suction) ingredient liquid from the ingredient container 110 via the liquid extraction component 120 and to transfer the extracted ingredient liquid from the liquid extraction component 120 to the mixing unit 140. Under the action of the ingredient pump 170, the beverage resulting from mixing the ingredient liquid with the water in the mixing unit 140, is further transferred to, and dispensed by, the faucet 150.

The order of actions 1, 2 and 3 may vary based on the implementation of the beverage dispensing procedure. During the beverage dispensing procedure, the cleaning pump 220 is not active (no water is transferred to the liquid extraction component 120.

After a beverage has been served (according to the aforementioned beverage dispensing procedure), the controller 180 commands the actuator 130 to move the liquid extraction component 120 downwardly to disengage from the ingredient container 110, in the retracted position of the liquid extraction component 120. In its retracted position, the liquid extraction component 120 is no longer in contact with the ingredient liquid stored in the ingredient container 110. Optionally, the controller 180 also commands the water pump 160 and the ingredient pump 170 to stop (e.g. for a short period of time before starting the self-cleaning procedure).

Referring more specifically to Figures 3, 5, 9 and 10, following is a description of the self-cleaning procedure.

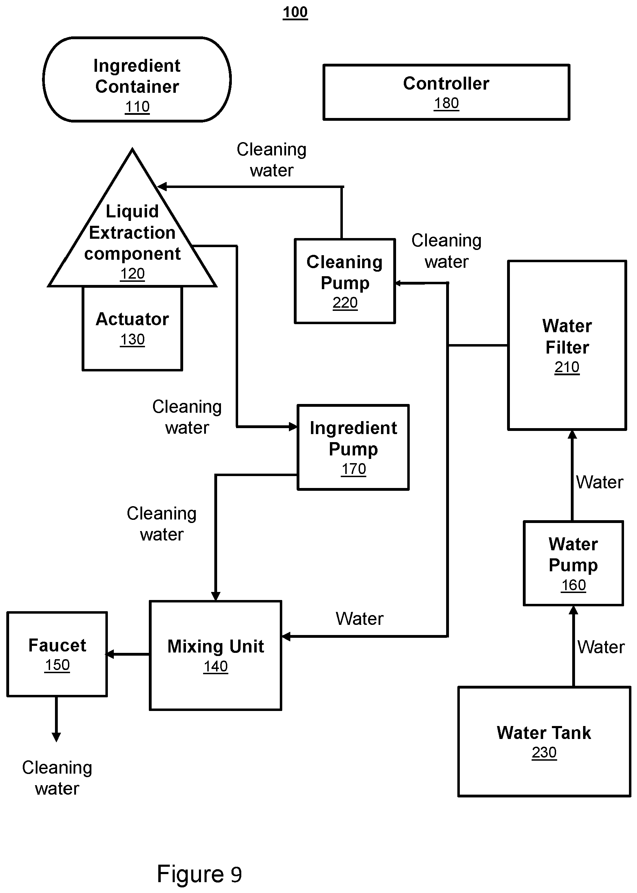

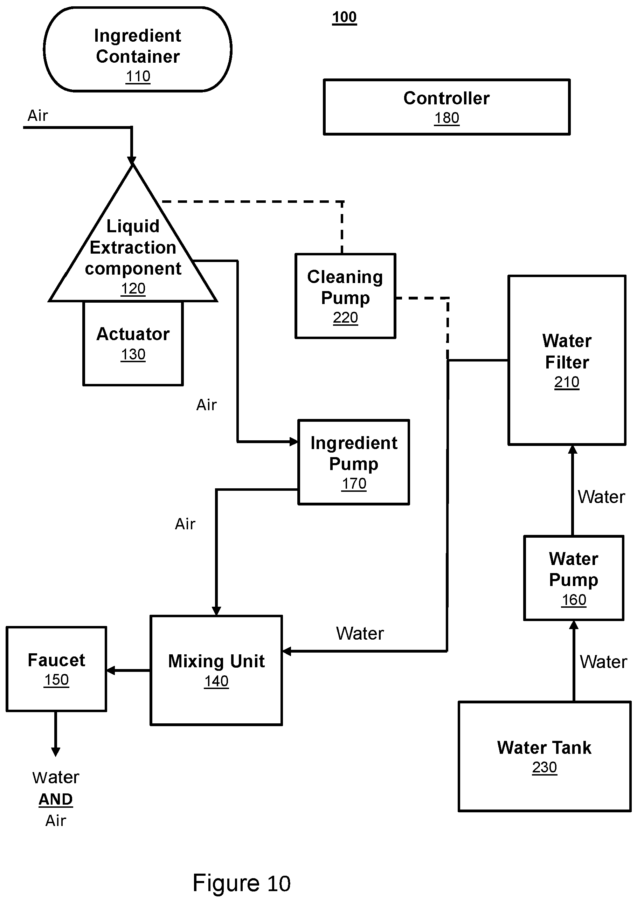

After a beverage has been served (according to the aforementioned beverage dispensing procedure), the self-cleaning procedure is performed. The self-cleaning procedure is based on the following two functionalities: water cleaning functionality (illustrated in Figure 9) and air cleaning functionality (illustrated in Figure 10). When performing the self-cleaning procedure, the liquid extraction component 120 is in the retracted position (no longer in contact with the ingredient liquid stored in the ingredient container 110).

The following actions are taken when executing the water cleaning functionality. Water circulating through the cleaning pump 220 to the mixing unit 140 via the liquid extraction component 120 and the ingredient pump 170 is referred to as cleaning water, since this circulation of water only occurs during the cleaning procedure.

Action 1: the controller 180 commands the water pump 160 to transfer water from the water tank 230 to the mixing unit 140 (through the water filter 210 when present as illustrated in Figure 9).

Action 2: the controller 180 commands the cleaning pump 220 to transfer cleaning water from the water tank 230 to the liquid extraction component 120 (through the water filter 210 when present).

Action 3: the controller 180 commands the ingredient pump 170 to transfer the cleaning water from the liquid extraction component 120 to the mixing unit 140. Under the action of the ingredient pump 170, the cleaning water resulting from mixing the cleaning water transferred by the ingredient pump 170 from the liquid extraction component 120 and the water transferred by the water pump 160 from the water tank 230 (though the water filter 210 if present), is further transferred to, and dispensed by, the faucet 150.

The order of actions 1, 2 and 3 may vary based on the implementation of the water cleaning functionality. However, in the configuration illustrated in Figure 9, the water pump 160 and the cleaning pump 220 need to be activated simultaneously to circulate cleaning water through the liquid extraction component 120. In an alternative configuration (not represented in the Figures), the cleaning pump 220 can be directly connected to the water tank 230, in which case it can be operated independently of the water pump 160.

For each action (1, 2 and 3), the speed of the corresponding pump (160, 220 or 170) is set to a given value (which determines a corresponding flow rate of fluid through the pump). The given speed value of each pump (160, 220 and 170) is transmitted via the respective commands sent by the controller 180. The speed of each pump (160, 220 and 170) remains constant during the execution of the water cleaning functionality. Alternatively, the speed of at least one of the pumps (160, 220 or 170) varies during the execution of the water cleaning functionality.

The pumps (160, 220 and 170) are active for the same duration corresponding to the duration of the execution of the water cleaning functionality. Alternatively, at least one of the pumps (160, 220 or 170) is not active during the entire duration of the execution of the water cleaning functionality. For example, one of the pumps becomes active a certain time after the beginning of the execution of the water cleaning functionality, becomes inactive a certain time before the end of the execution of the water cleaning functionality, etc.

When any of the pumps (160, 220 or 170) no longer needs to be active, the controller 180 commands the pump to stop. At least, at the end of the execution of the water cleaning functionality, the three pumps (160, 220 and 170) become inactive.

The circulation of cleaning water cleans the liquid extraction component 120, the ingredient pump 170, the mixing unit 140 and the faucet 150. The liquid conduits interconnecting the liquid extraction component 120 and the ingredient pump 170, the ingredient pump 170 and the mixing unit 140, the mixing unit 140 and the faucet 150, are also cleaned by the circulation of cleaning water.

The following actions are taken when executing the air cleaning functionality.

Action 1: the controller 180 commands the water pump 160 to transfer water from the water tank 230 to the mixing unit 140 (through the water filter 210 when present as illustrated in Figure 9).

Action 2: the controller 180 commands the ingredient pump 170 to transfer air through the liquid extraction component 120 to the mixing unit 140. The air is sucked into the liquid extraction component 120 via the liquid extraction inlet 122. Under the action of the ingredient pump 170, the air transferred by the ingredient pump 170 from the liquid extraction component 120 and the water transferred by the water pump 160 from the water tank 230 (though the water filter 210 if present), are further transferred to, and dispensed by, the faucet 150.

The order of actions 1 and 2 may vary based on the implementation of the air cleaning functionality. The cleaning pump 220 is not active during the execution of the air cleaning functionality.

For each action (1 and 2), the speed of the corresponding pump (160 or 170) is set to a given value (which determines a corresponding flow rate of fluid through the pump). The given speed value of each pump (160 and 170) is transmitted via the respective commands sent by the controller 180. The speed of each pump (160 and 170) remains constant during the execution of the air cleaning functionality. Alternatively, the speed of at least one of the pumps (160 or 170) varies during the execution of the air cleaning functionality.

The pumps (160 and 170) are active for the same duration corresponding to the duration of the execution of the air cleaning functionality. Alternatively, at least one of the pumps (160 or 170) is not active during the entire duration of the execution of the air cleaning functionality. For example, one of the pumps becomes active a certain time after the beginning of the execution of the air cleaning functionality, becomes inactive a certain time before the end of the execution of the air cleaning functionality, etc.

When any of the pumps (160 or 170) no longer needs to be active, the controller 180 commands the pump to stop. At least, at the end of the execution of the air cleaning functionality, the two pumps (160 and 170) become inactive.

The circulation of air cleans the liquid extraction component 120, the ingredient pump 170, the mixing unit 140 and the faucet 150. The liquid conduits interconnecting the liquid extraction component 120 and the ingredient pump 170, the ingredient pump 170 and the mixing unit 140, the mixing unit 140 and the faucet 150, are also cleaned by the circulation air. The simultaneous circulation of water in the mixing unit 140, the faucet 150 and the liquid conduit interconnecting the mixing unit 140 and the faucet 150 improves the evacuation of residues detached by the circulation of air.

Optionally, action 1 is not performed when executing the air cleaning functionality, so that no water is not circulated during the procedure. In this case, action 2 results in sucking air through the liquid extraction component 120 towards the mixing unit 140, the air being further transferred to, and dispensed by, the faucet 150.

The self-cleaning procedure comprises the execution of at least one of the water cleaning functionality and the air cleaning functionality. The self-cleaning procedure generally comprises (but is not limited to) a sequence of execution of multiple instances of any one of the water cleaning functionality and the air cleaning functionality, two consecutive instances being optionally separated by a time interval. The sequence may start with the water cleaning functionality or the air cleaning functionality. An instance of the water cleaning functionality is generally followed by an instance of the air cleaning functionality. However, several consecutive instances of the water cleaning functionality may be executed before an instance of the air cleaning functionality. Similarly, an instance of the air cleaning functionality is generally followed by an instance of the water cleaning functionality. However, several consecutive instances of the air cleaning functionality may be executed before an instance of the water cleaning functionality. The self-cleaning procedure may also comprise one or more instances of the air cleaning functionality only or one or more instances of the water cleaning functionality only.

The water cleaning and air cleaning functionalities can be defined by the respective speeds of the water pump 160, ingredient pump 170 and cleaning pump 220; as well as optional time intervals when all the pumps remain idle.

For example, the sequence is defined by:
- N (e.g. 10) repetitions of a first cycle (1);
- optionally followed by a time interval T (e.g. 2 milliseconds, but could also be null) where the pumps 160, 220 and 170 idle;
- followed by M (e.g. 4) repetitions of a second cycle (2).

Cycle 1 comprises:
- for a time interval t1 (e.g. 100 milliseconds): operate the water pump 160 at speed v1, operate the cleaning pump 220 at speed v2 and operate the ingredient pump 170 at speed v3;
- optionally having pumps 160, 220 and 170 idle for a time interval t2 (e.g. 1 millisecond, but could also be null);
- for a time interval t3 (e.g. 100 milliseconds): operate the water pump 160 at speed v4, operate the cleaning pump 220 at speed v5 and operate the ingredient pump 170 at speed v6;
- optionally having pumps 160, 220 and 170 idle for a time interval t4 (e.g. 1 millisecond, but could also be null).

For example, v1, v2 and v3 are set to values (e.g. respectively 35%, 0% and 100% of their maximum capacity) implementing the air cleaning functionality; while v4, v5 and v6 (e.g. respectively 35%, 75% and 100% of their maximum capacity) are set to values implementing the water cleaning functionality.

Cycle 2 comprises:
- for a time interval t5 (e.g. 50 milliseconds): operate the water pump 160 at speed v7, operate the cleaning pump 220 at speed v8 and operate the ingredient pump 170 at speed v9;
- optionally having pumps 160, 220 and 170 idle for a time interval t6 (e.g. 2 milliseconds, but could also be null);
- for a time interval t7 (e.g. 25 milliseconds): operate the water pump 160 at speed v10, operate the cleaning pump 220 at speed v11 and operate the ingredient pump 170 at speed v12;
- optionally having pumps 160, 220 and 170 idle for a time interval t6 (e.g. 2 milliseconds, but could also be null).

For example, v7, v8 and v9 are set to values (e.g. respectively 35%, 0% and 100% of their maximum capacity) implementing the air cleaning functionality; while v10, v11 and v12 are set to values (e.g. respectively 35%, 0% and 100% of their maximum capacity) implementing the water cleaning functionality.

The sequence performing the self-cleaning procedure, which occurs just after a beverage preparation and serving, is referred to as the first sequence. Optionally, one or more additional sequences are performed after respective predetermined interval(s) of time, if no new beverage preparation and serving occurs. For example, a second sequence occurs 3 hours after the beverage preparation and serving, and a third sequence is performed 2 hours after the second sequence (if no beverage has been prepared and served in the meantime). The second and third sequences have their own execution parameters (speed of the pumps, number of repetitions, idle time intervals, etc.), as was previously described with the exemplary implementation of the first sequence.

To implement the beverage dispensing and self-cleaning procedures, the controller 180 automatically determines operating parameters (e.g. suitable activation time, speed of operation, time in operation, etc.) for the water pump 160, the ingredient pump 170 and the cleaning pump 220. The controller 180 also automatically determines suitable operating parameters of the actuator 130 (e.g. direction of movement, suitable time and speed of operation for each movement, etc.). Based on these determinations, the corresponding control commands are respectively sent to the water pump 160, the ingredient pump 170, the cleaning pump 220 and the actuator 130.

Furthermore, as mentioned previously in relation to Figure 5, data related to the container 110 may be stored by the tag 115. In an exemplary implementation, data stored by the tag 115 are used by the controller 180 for determining one or more operating parameters of at least one of the water pump 160, the ingredient pump 170, the cleaning pump 220 and the actuator 130. The one or more operating parameters are used for implementing at least one of the beverage dispensing and the self-cleaning procedures. This allows a customization of the implementation of the beverage dispensing procedure and / or self-cleaning procedure, based on a given type of container 110 being used. The given type of container 110 being used stores a given type of liquid ingredient, different from other type(s) of liquid ingredient(s) stored in other type(s) of container. The beverage dispensing system 110 supports (and adapts to) the various types of containers storing the various types of liquid ingredients, by customizing the beverage dispensing procedure and / or the self-cleaning procedure based on the parameters stored in the tag 115.

The previously described self-cleaning procedure has several advantages, resulting from its close integration with the beverage dispensing procedure. The cleaning procedure is performed each time a beverage dispensing procedure occurs. The cleaning water resulting from the cleaning procedure is added to the beverage, by performing the cleaning procedure just after completion of the beverage dispensing procedure. Consequently, the cleaning water does not need to be disposed of. The self-cleaning procedure allows the usage of containers storing different ingredient liquids, without risking contamination of a currently dispensed beverage using an ingredient liquid stored in a container, by another ingredient liquid (stored in another container) used for a previously dispensed beverage.

Moreover, the self-cleaning procedure is also beneficial with respect to the water filtration functionality of the system 100, implemented when the water filter 210 is present. During filtration, significant amounts of chlorine and other substances used in tap water to ensure its safety are removed. While this improves the taste and quality of the filtered water, it also creates conditions where bacteria, mold, or fungi could develop more easily in the system. By incorporating an automated cleaning or drainage mode (such as the presently described self-cleaning procedure), the system 100 ensures that these risks are mitigated, maintaining the hygiene and safety of the water, and extending the overall lifespan of the filtration components.

Optionally, a dedicated cleaning container can be used, to perform a deeper cleaning of the beverage dispensing system 100, once in a while (e.g. after a pre-defined number of occurrences of beverage dispensing has occurred). The cleaning container stores a cleaning liquid which is circulated in the liquid extraction component 120, ingredient pump 170, mixing unit 140 and faucet 150 during the beverage dispensing procedure. The self-cleaning procedure evacuates potential remnants of the cleaning liquid circulated during the beverage dispensing procedure. Examples of cleaning liquid include water, water mixed with cleaning product(s), etc.

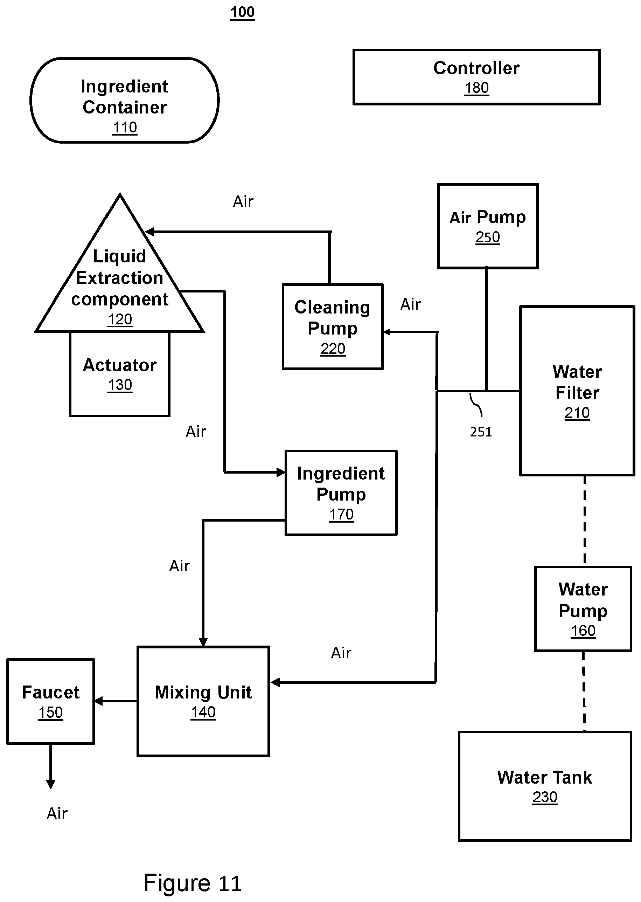

Reference is now made concurrently to Figures 5 and 11. The beverage dispensing system 100 illustrated in Figure 11 comprises all the previously described components, and further comprises the air pump 250 (previously introduced in relation to Figure 5). The air pump 250 is optional and aims at complementing the previously described self-cleaning procedure, by performing a drying procedure.

Figure 11 illustrates the air pump 250 being connected to the liquid conduit 251 connecting the water filter 210 to both the cleaning pump 220 and the mixing unit 140.

The drying procedure is performed by a simultaneous activation of the air pump 250, the cleaning pump 220 and the ingredient pump 170, to circulate air in the cleaning pump 220, the liquid extraction component 120, the ingredient pump 170, the mixing unit 140 and the faucet 150; and in all the liquid conduits interconnecting these components. The circulation of air dries the aforementioned components and liquid conduits, ensuring a minimum level of humidity to avoid proliferation of microorganisms.

The air pump 250 is controlled by the controller 180 in a manner similar to the previously described control of the other pumps. The localization of the air pump 250 may vary, based on a particular implementation of the beverage dispensing system 100.

The drying procedure can be performed at any time, including just after one of the previously described sequences of the self-cleaning procedure, an interval of time (e.g. 1 minute) after one of the previously described sequences of the self-cleaning procedure, etc. The drying procedure can also be integrated to one of the previously described sequences of the self-cleaning procedure.

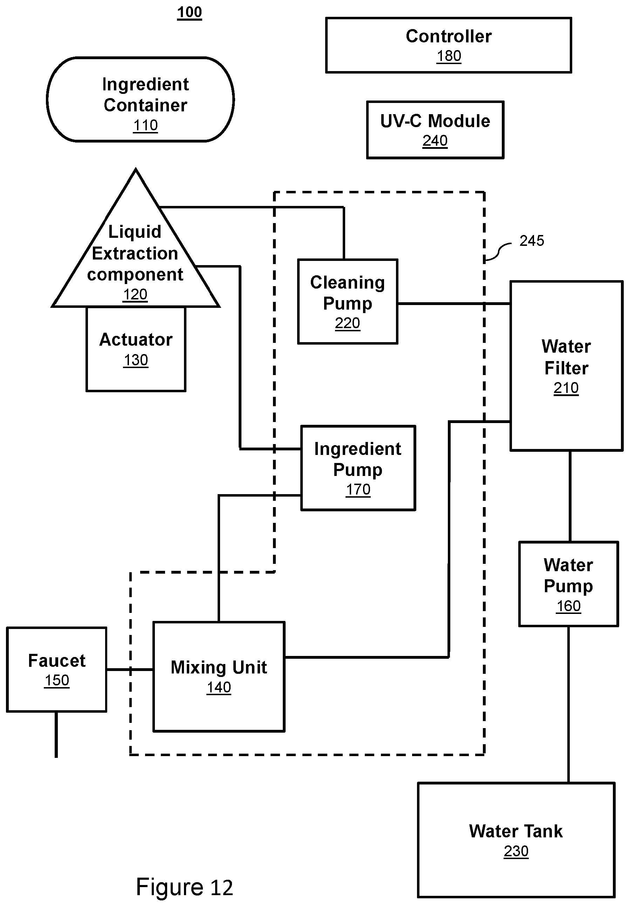

Reference is now made concurrently to Figures 5 and 12. The beverage dispensing system 100 illustrated in Figure 12 comprises all the previously described components, and further comprises the UV-C module 240 (previously introduced in relation to Figure 5). The UV-C module 240 is optional and aims at complementing the previously described self-cleaning procedure.

As is well known in the art, the UV-C module 240 emits UV-C radiations, which have the property to eliminate microbial pathogens when operated at a pre-defined wavelength. Such microbial pathogens may develop on internal walls of components of the beverage dispensing system 100, where water or ingredient liquid circulate. In an exemplary implementation, the UV-C module comprises an UV-C led operating at the pre-defined wavelength.

The UV-C module 240 is positioned within the beverage dispensing system 100, so that the emitted UV-C radiations cover a given area 245 within the beverage dispensing system 100. For illustration purposes, the area 245 illustrated in Figure 12 includes the cleaning pump 220, the ingredient pump 170 and the mixing unit 140. However, additional components such as the water pump 160 and / or the liquid extraction component 120 may be included in the area 245. Furthermore, liquid conduits interconnecting the aforementioned components are also at least partially included in the area 245 (e.g. liquid conduit between the cleaning pump 220 and the liquid extraction component 120, liquid conduit between the ingredient pump 170 and the mixing unit 140, etc.).

The representation of the area 245 in Figure 12 is schematic, and only aims at illustrating which components of the beverage dispensing system 100 are covered (at least partially) by the UV-C radiations. In reality, the area covered by the UV-C radiations is a three-dimensional (3D) shape, for example a cone extending downwardly from the UV-C module 240.

The design of the beverage dispensing system 100 (e.g. size, shape and positioning of various components) can be adapted so that the targeted components are included in the area 245. Furthermore, the targeted components (e.g. pumps 170 and 220, liquid conduits, etc.) need to be made of a material allowing transmission of the UV-C radiations, so that microbial pathogens on internal walls of the targeted components can be eliminated.

The UV-C module 240 is activated after each beverage dispensing procedure, which has been described previously. For example, the UV-C module 240 is activated during and / or after completion of the previously described self-cleaning procedure.

Operations of the UV-C module 240 are controlled by the controller 180. For instance, the controller 180 determines when to command the UV-C module 240 to emit UV-C radiations and for which duration. For example, the duration of emission of the UV-C radiations is determined based on the wavelength of the UV-C radiations and the irradiance needed for efficiently eliminating microbial pathogens (e.g. eliminating 99.9% of the microbial pathogens).

## Claims

1. A self-cleaning multi-servings beverage dispensing system (100) adapted for preparing and serving a beverage, the system comprising:
a container engaging inlet port adapted for removably engaging a container (110) storing an ingredient liquid;
a liquid extraction component (120) slidably movable between a retracted position and an extended position, the liquid extraction component (120) not being in contact with the ingredient liquid when the container (110) is engaged in the container engaging inlet port and the liquid extraction component (120) is in the retracted position, the liquid extraction component (120) being in contact with the ingredient liquid when the container (110) is engaged in the container engaging inlet port and the liquid extraction component (120) is in the extended position;
an actuator (130) adapted for moving the liquid extraction component (120) between the retracted position and the extended position;
an ingredient pump (170) for extracting at least some of the ingredient liquid from the container (110) via the liquid extraction component (120) when the liquid extraction component (120) is in the extended position and the container (110) is engaged in the container engaging inlet port, and transferring the extracted ingredient liquid from the liquid extraction component (120) to a mixing unit (140);
a water tank (230) for storing water;
a water pump (160) for transferring water from the water tank (230) to the mixing unit (140);
the mixing unit (140) for receiving and mixing the ingredient liquid transferred to the mixing unit (140) and the water transferred to the mixing unit (140);
a mixing unit outlet (150) for pouring a content of the mixing unit (140);
a cleaning pump (220) for transferring cleaning water from the water tank (230) to the liquid extraction component (120); and
a controller (180) comprising electronic means for controlling operations of the beverage dispensing system (100), the controller (180) being adapted to perform a self-cleaning procedure by sending commands to the cleaning pump (220), the water pump (160) and the ingredient pump (170) to execute at least one of:
an air cleaning functionality comprising:
a transfer of air by the ingredient pump (170) through the liquid extraction component (120) to the mixing unit (140), the air being sucked into the liquid extraction component (120) via the liquid extraction inlet (122); and
a water cleaning functionality comprising:
a transfer of water by the water pump (160) from the water tank (230) to the mixing unit (140);
a transfer of cleaning water by the cleaning pump (220) from the water tank (230) to the liquid extraction component (120); and
a transfer of the cleaning water by the ingredient pump (170) from the liquid extraction component (120) to the mixing unit (140).

2. The self-cleaning multi-servings beverage dispensing system of claim 1, wherein the air cleaning functionality further comprises a transfer of water by the water pump (160) from the water tank (230) to the mixing unit (140).

3. The self-cleaning multi-servings beverage dispensing system of claim 1, wherein the liquid extraction component (120) further comprises a liquid extraction outlet (124) adapted for transferring any of the ingredient liquid, the cleaning water and the air to the mixing unit (140); and the liquid extraction component (120) further comprises a cleaning water inlet (126) adapted for receiving the cleaning water from the cleaning pump (220).

4. The self-cleaning multi-servings beverage dispensing system of claim 1, wherein the cleaning pump (220) is in direct or indirect liquid communication with the water pump (160).

5. The self-cleaning multi-servings beverage dispensing system of claim 1, further comprising a water filter (210), the water pump (160) being in liquid communication with the water tank (230) and the water filter (210), the mixing unit (140) being in liquid communication with the water filter (210), and the cleaning pump (220) being in liquid communication with the water filter (210).

6. The self-cleaning multi-servings beverage dispensing system of claim 1, wherein performing the self-cleaning procedure comprises repeating N iterations of: an execution of the air cleaning functionality followed by an execution of the water cleaning functionality or an execution of the water cleaning functionality followed by an execution of the air cleaning functionality, N being an integer greater than 0.

7. The self-cleaning multi-servings beverage dispensing system of claim 1, wherein performing the self-cleaning procedure comprises:
an execution of the air cleaning functionality, followed by a predetermined time interval during which the cleaning pump (220), the water pump (160) and the ingredient pump (170) are inactive, followed by an execution of the water cleaning functionality; or
an execution of the water cleaning functionality, followed by a predetermined time interval during which the cleaning pump (220), the water pump (160) and the ingredient pump (170) are inactive, followed by an execution of the air cleaning functionality.

8. The self-cleaning multi-servings beverage dispensing system of claim 1, wherein the self-cleaning procedure is performed after a beverage has been prepared and served, and the liquid extraction component (120) has been moved in the retracted position by the actuator (130) through a command sent by the controller (180) to the actuator (130).

9. The self-cleaning multi-servings beverage dispensing system of claim 8, wherein the self-cleaning procedure is repeated at least one time after a predetermined time interval, if a new beverage has not been prepared and served during the time interval.

10. The self-cleaning multi-servings beverage dispensing system of claim 8, wherein the self-cleaning procedure is adapted based on the type of beverage being prepared and served.

11. The self-cleaning multi-servings beverage dispensing system of claim 10, wherein the container (110) further comprises a tag (115) storing data for performing the self-cleaning procedure, the beverage dispensing system (100) further comprising a contactless data reader (195) adapted for reading the data stored by the tag (115), the controller (180) using the data read by the contactless data reader (195) from the tag (115) to perform the self-cleaning procedure.

12. The self-cleaning multi-servings beverage dispensing system of claim 1, wherein during the self-cleaning procedure, the mixing unit outlet (150) pours any liquid present in the mixing unit (140).

13. The self-cleaning multi-servings beverage dispensing system of claim 1, wherein performing the self-cleaning procedure by the controller (180) comprises determining time of operation and speed of operation for the cleaning pump (220), the water pump (160) and the ingredient pump (170).

14. The self-cleaning multi-servings beverage dispensing system of claim 1 further comprising an air pump (250), the controller (180) being further adapted to perform a drying procedure by sending commands to the air pump (250), the cleaning pump (220) and the ingredient pump (170) to circulate air in the cleaning pump (220), the liquid extraction component (120), the ingredient pump (170) and the mixing unit (140), the air pump (250) being connected to a liquid conduit (251) connecting the cleaning pump (220) and the mixing unit (140) to the water pump (160).

15. The self-cleaning multi-servings beverage dispensing system of claim 1 further comprising an Ultraviolet-C (UV-C) module (240), UV-C radiations emitted by the UV-C module (240) covering an area (245) of the beverage dispensing system (100) where one or more components of the beverage dispensing system (100) are located.

## Patentansprüche

1. Selbstreinigendes Mehrportionen-Getränkeausschanksystem (100), das zum Zubereiten und Portionieren eines Getränkes ausgelegt ist, wobei das System folgendes umfasst:
einen Behältereingriff-Einlassanschluss, der zum lösbaren Eingreifen in einen Behälter (110), in dem eine Zutatenflüssigkeit lagert, ausgelegt ist;
eine Flüssigkeitsextraktionskomponente (120), die verschiebbar zwischen einer zurückgezogenen Position und einer ausgefahrenen Position beweglich ist, wobei die Flüssigkeitsextraktionskomponente (120) nicht mit der Zutatenflüssigkeit in Kontakt ist, wenn der Behälter (110) in den Behältereingriff-Einlassanschluss eingreift, und sich die Flüssigkeitsextraktionskomponente (120) in der zurückgezogenen Position befindet, wobei die Flüssigkeitsextraktionskomponente (120) in Kontakt mit der Zutatenflüssigkeit ist, wenn der Behälter (110) in den Behältereingriff-Einlassanschluss eingreift und sich die Flüssigkeitsextraktionskomponente (120) in der ausgefahrenen Position befindet;
einen Aktuator (130), der zum Bewegen der Flüssigkeitsextraktionskomponente (120) zwischen der zurückgezogenen Position und der ausgefahrenen Position ausgelegt ist;
eine Zutatenpumpe (170) zum Extrahieren von zumindest etwas von der Zutatenflüssigkeit aus dem Behälter (110) über die Flüssigkeitsextraktionskomponente (120), wenn sich die Flüssigkeitsextraktionskomponente (120) in der ausgefahrenen Position befindet und der Behälter (110) in den Behältereingriff-Einlassanschluss eingreift, und Überführen der extrahierten Zutatenflüssigkeit aus der Flüssigkeitsextraktionskomponente (120) in eine Mischeinheit (140);
einen Wassertank (230) zum Lagern von Wasser;
eine Wasserpumpe (160) zum Überführen von Wasser aus dem Wassertank (230) in die Mischeinheit (140);
die Mischeinheit (140) zum Aufnehmen und Mischen der in die Mischeinheit (140) überführten Zutatenflüssigkeit und des in die Mischeinheit (140) überführten Wassers;
einen Mischeinheitenauslass (150) zum Gießen eines Inhalts der Mischeinheit (140);
eine Reinigungspumpe (220) zum Überführen von Spülwasser aus dem Wassertank (230) in die Flüssigkeitsextraktionskomponente (120); und
eine Steuerung (180), die elektronische Einrichtungen zum Steuern von Operationen des Getränkeausschanksystems (100) umfasst, wobei die Steuerung (180) zum Durchführen einer Selbstreinigungsprozedur ausgelegt ist, indem sie Befehle an die Reinigungspumpe (220), die Wasserpumpe (160) und die Zutatenpumpe (170) sendet, mindestens eines von Folgendem auszuführen:
eine Luftreinigungsfunktion, umfassend:
eine Überführung von Luft mittels der Zutatenpumpe (170) durch die Flüssigkeitsextraktionskomponente (120) in die Mischeinheit (140), wobei die Luft über den Flüssigkeitsextraktionseinlass (122) in die Flüssigkeitsextraktionskomponente (120) gesaugt wird; und
eine Wasserreinigungsfunktion, umfassend:
eine Überführung von Wasser mittels der Wasserpumpe (160) aus dem Wassertank (230) in die Mischeinheit (140);
eine Überführung von Spülwasser mittels der Reinigungspumpe (220) aus dem Wassertank (230) in die Flüssigkeitsextraktionskomponente (120); und
eine Überführung des Spülwassers mittels der Zutatenpumpe (170) aus der Flüssigkeitsextraktionskomponente (120) in die Mischeinheit (140).

2. Selbstreinigendes Mehrportionen-Getränkeausschanksystem nach Anspruch 1, wobei die Luftreinigungsfunktion ferner eine Überführung von Wasser aus dem Wassertank (230) in die Mischeinheit (140) durch die Wasserpumpe (160) umfasst.

3. Selbstreinigendes Mehrportionen-Getränkeausschanksystem nach Anspruch 1, wobei die Flüssigkeitsextraktionskomponente (120) ferner einen Flüssigkeitsextraktionsauslass (124) umfasst, der zum Überführen jeglicher Zutatenflüssigkeit, des Spülwassers und der Luft in die Mischeinheit (140) ausgelegt ist, und die Flüssigkeitsextraktionskomponente (120) ferner einen Spülwassereinlass (126) umfasst, der zum Aufnehmen des Spülwassers aus der Reinigungspumpe (220) ausgelegt ist.

4. Selbstreinigendes Mehrportionen-Getränkeausschanksystem nach Anspruch 1, wobei die Reinigungspumpe (220) in direkter oder indirekter Flüssigkeitskommunikation mit der Wasserpumpe (160) steht.

5. Selbstreinigendes Mehrportionen-Getränkeausschanksystem nach Anspruch 1, ferner umfassend einen Wasserfilter (210), wobei die Wasserpumpe (160) in Flüssigkeitskommunikation mit dem Wassertank (230) und dem Wasserfilter (210) steht, wobei die Mischeinheit (140) in Flüssigkeitskommunikation mit dem Wasserfilter (210) steht und die Reinigungspumpe (220) in Flüssigkeitskommunikation mit dem Wasserfilter (210) steht.

6. Selbstreinigendes Mehrportionen-Getränkeausschanksystem nach Anspruch 1, wobei das Durchführen der Selbstreinigungsprozedur das Wiederholen von N Iterationen: einer Ausführung der Luftreinigungsfunktion, gefolgt von einer Ausführung der Wasserreinigungsfunktion oder einer Ausführung der Wasserreinigungsfunktion gefolgt von einer Ausführung der Luftreinigungsfunktion umfasst, wobei N eine ganze Zahl größer 0 ist.

7. Selbstreinigendes Mehrportionen-Getränkeausschanksystem nach Anspruch 1, wobei das Durchführen der Selbstreinigungsprozedur folgendes umfasst:
eine Ausführung der Luftreinigungsfunktion, gefolgt von einem vorbestimmten Zeitintervall, während dessen die Reinigungspumpe (220), die Wasserpumpe (160) und die Zutatenpumpe (170) inaktiv sind, gefolgt von einer Ausführung der Wasserreinigungsfunktion; oder
eine Ausführung der Wasserreinigungsfunktion, gefolgt von einem vorbestimmten Zeitintervall, während dessen die Reinigungspumpe (220), die Wasserpumpe (160) und die Zutatenpumpe (170) inaktiv sind, gefolgt von einer Ausführung der Luftreinigungsfunktion.

8. Selbstreinigendes Mehrportionen-Getränkeausschanksystem nach Anspruch 1, wobei die Selbstreinigungsprozedur durchgeführt wird, nachdem ein Getränk zubereitet und portioniert worden ist und die Flüssigkeitsextraktionskomponente (120) von dem Aktuator (130) durch einen von der Steuerung (180) an den Aktuator (130) gesendeten Befehl in die zurückgezogene Position bewegt worden ist.

9. Selbstreinigendes Mehrportionen-Getränkeausschanksystem nach Anspruch 8, wobei die Selbstreinigungsprozedur mindestens einmal nach einem vorbestimmten Zeitintervall wiederholt wird, wenn während des Zeitintervalls kein neues Getränk zubereitet und portioniert worden ist.

10. Selbstreinigendes Mehrportionen-Getränkeausschanksystem nach Anspruch 8, wobei die Selbstreinigungsprozedur basierend auf der Art von Getränk, das zubereitet und portioniert wird, angepasst wird.

11. Selbstreinigendes Mehrportionen-Getränkeausschanksystem nach Anspruch 10, wobei der Behälter (110) ferner eine Markierung (115) umfasst, die Daten zur Durchführung der Selbstreinigungsprozedur speichert, wobei das Getränkeausschanksystem (100) ferner ein kontaktloses Datenlesegerät (195) umfasst, das zum Auslesen der von der Markierung (115) gespeicherten Daten ausgelegt ist, wobei die Steuerung (180) die von dem kontaktlosen Datenlesegerät (195) aus der Markierung (115) ausgelesenen Daten zur Durchführung der Selbstreinigungsprozedur nutzt.

12. Selbstreinigendes Mehrportionen-Getränkeausschanksystem nach Anspruch 1, wobei der Mischeinheitenauslass (150) während der Selbstreinigungsprozedur jegliche, in der Mischeinheit (140) vorhandene Flüssigkeit auslässt.

13. Selbstreinigendes Mehrportionen-Getränkeausschanksystem nach Anspruch 1, wobei das Durchführen der Selbstreinigungsprozedur durch die Steuerung (180) das Bestimmen der Betriebszeit und Betriebsgeschwindigkeit für die Reinigungspumpe (220), die Wasserpumpe (160) und die Zutatenpumpe (170) umfasst.

14. Selbstreinigendes Mehrportionen-Getränkeausschanksystem nach Anspruch 1, ferner umfassend eine Luftpumpe (250), wobei die Steuerung (180) ferner zum Ausführen einer Trocknungsprozedur ausgelegt ist, indem sie Befehle an die Luftpumpe (250), die Reinigungspumpe (220) und die Zutatenpumpe (170) sendet, Luft in der Reinigungspumpe (220), der Flüssigkeitsextraktionskomponente (120), der Zutatenpumpe (170) und der Mischeinheit (140) zirkulieren zu lassen, wobei die Luftpumpe (250) an eine Flüssigkeitsleitung (251) angeschlossen ist, die die Reinigungspumpe (220) und die Mischeinheit (140) mit der Wasserpumpe (160) verbindet.

15. Selbstreinigendes Mehrportionen-Getränkeausschanksystem nach Anspruch 1, ferner umfassend ein Ultraviolett-C-Modul (UV-C-Modul) (240), wobei von dem UV-C-Modul (240) emittierte UV-C-Strahlung einen Bereich (245) des Getränkeausschanksystems (100) abdeckt, in dem sich eine oder mehrere Komponenten des Getränkeausschanksystems (100) befinden.

## Revendications

1. Un système autonettoyant de distribution de boissons à plusieurs portions (100) adapté à la préparation et à la distribution d'une boisson, le système comprenant :
un orifice d'entrée d'emboîtement de récipient, adapté pour l'emboîtement amovible d'un récipient (110) contenant un liquide ingrédient ;
un composant d'extraction de liquide (120) pouvant être déplacé par coulissement entre une position rétractée et une position déployée, le composant d'extraction de liquide (120) n'étant pas en contact avec le liquide ingrédient lorsque le récipient (110) est emboîté dans l'orifice d'entrée d'emboîtement de récipient et que le composant d'extraction de liquide (120) est en position rétractée, le composant d'extraction de liquide (120) étant en contact avec le liquide ingrédient lorsque le récipient (110) est emboîté dans l'orifice d'entrée d'emboîtement de récipient et que le composant d'extraction de liquide (120) est en position déployée ;
un actionneur (130) adapté pour déplacer le composant d'extraction de liquide (120) entre la position rétractée et la position déployée ;
une pompe à ingrédients (170) pour extraire au moins une partie du liquide ingrédient du récipient (110) via le composant d'extraction de liquide (120) lorsque le composant d'extraction de liquide (120) est en position déployée et que le récipient (110) est emboîté dans l'orifice d'entrée d'emboîtement de récipient, et pour transférer le liquide ingrédient extrait du composant d'extraction de liquide (120) vers une unité de mélange (140) ;
un réservoir d'eau (230) destiné au stockage d'eau ;
une pompe à eau (160) pour transférer l'eau du réservoir d'eau (230) vers l'unité de mélange (140) ;
l'unité de mélange (140) pour recevoir et mélanger le liquide ingrédient transféré vers l'unité de mélange (140) et l'eau transférée vers l'unité de mélange (140) ;
une sortie d'unité de mélange (150) pour verser le contenu de l'unité de mélange (140) ;
une pompe de nettoyage (220) pour transférer l'eau de nettoyage du réservoir d'eau (230) vers le composant d'extraction de liquide (120) ; et
un régulateur (180) comprenant des moyens électroniques pour contrôler les opérations du système de distribution de boissons (100), le régulateur (180) étant adapté pour effectuer une procédure d'autonettoyage en envoyant des commandes à la pompe de nettoyage (220), à la pompe à eau (160) et à la pompe à ingrédients (170) afin d'exécuter au moins l'une des fonctions suivantes :
une fonction de nettoyage à l'air comprenant :
un transfert d'air par la pompe à ingrédients (170) à travers le composant d'extraction de liquide (120) vers l'unité de mélange (140), l'air étant aspiré dans le composant d'extraction de liquide (120) via l'entrée d'extraction de liquide (122) ; et une fonction de nettoyage à l'eau comprenant :
un transfert d'eau par la pompe à eau (160) depuis le réservoir d'eau (230) vers l'unité de mélange (140) ;
un transfert d'eau de nettoyage par la pompe de nettoyage (220) depuis le réservoir d'eau (230) vers le composant d'extraction de liquide (120) ; et
un transfert de l'eau de nettoyage par la pompe à ingrédients (170) depuis le composant d'extraction de liquide (120) vers l'unité de mélange (140).

2. Le système autonettoyant de distribution de boissons à plusieurs portions selon la revendication 1, **caractérisé en ce que** la fonction de nettoyage à l'air comprend en outre un transfert d'eau par la pompe à eau (160) depuis le réservoir d'eau (230) vers l'unité de mélange (140).

3. Le système autonettoyant de distribution de boissons à plusieurs portions selon la revendication 1, **caractérisé en ce que** le composant d'extraction de liquide (120) comprend en outre une sortie d'extraction de liquide (124) adaptée pour transférer n'importe lequel des liquides ingrédients, l'eau de nettoyage et l'air vers l'unité de mélange (140) ; et le composant d'extraction de liquide (120) comprend en outre une entrée d'eau de nettoyage (126) adaptée pour recevoir l'eau de nettoyage provenant de la pompe de nettoyage (220).

4. Le système autonettoyant de distribution de boissons à plusieurs portions selon la revendication 1, **caractérisé en ce que** la pompe de nettoyage (220) est en communication liquide directe ou indirecte avec la pompe à eau (160).

5. Le système autonettoyant de distribution de boissons à plusieurs portions selon la revendication 1, comprenant en outre un filtre à eau (210), la pompe à eau (160) étant en communication liquide avec le réservoir d'eau (230) et le filtre à eau (210), l'unité de mélange (140) étant en communication liquide avec le filtre à eau (210), et la pompe de nettoyage (220) étant en communication liquide avec le filtre à eau (210).

6. Le système autonettoyant de distribution de boissons à plusieurs portions selon la revendication 1, **caractérisé en ce que** la procédure d'autonettoyage comprend la répétition de N itérations de : une exécution de la fonction de nettoyage à l'air, suivie d'une exécution de la fonction de nettoyage à l'eau, ou une exécution de la fonction de nettoyage à l'eau, suivie d'une exécution de la fonction de nettoyage à l'air, N étant un nombre entier supérieur à 0.

7. Le système autonettoyant de distribution de boissons à plusieurs portions selon la revendication 1, **caractérisé en ce que** la procédure d'autonettoyage comprend :
une exécution de la fonction de nettoyage à l'air, suivie d'un intervalle de temps prédéfini durant lequel la pompe de nettoyage (220), la pompe à eau (160) et la pompe à ingrédients (170) sont inactives, puis une exécution de la fonction de nettoyage à l'eau ; ou
une exécution de la fonction de nettoyage à l'eau, suivie d'un intervalle de temps prédéfini durant lequel la pompe de nettoyage (220), la pompe à eau (160) et la pompe à ingrédients (170) sont inactives, puis une exécution de la fonction de nettoyage à l'air .

8. Le système autonettoyant de distribution de boissons à plusieurs portions selon la revendication 1, **caractérisé en ce que** la procédure d'autonettoyage est effectuée après qu'une boisson a été préparée et servie, et que le composant d'extraction de liquide (120) a été déplacé en position rétractée par l'actionneur (130) grâce à une commande envoyée par le régulateur (180) à l'actionneur (130).

9. Le système autonettoyant de distribution de boissons à plusieurs portions selon la revendication 8, **caractérisé en ce que** la procédure d'autonettoyage est répétée au moins une fois après un intervalle de temps prédéterminé, si aucune nouvelle boisson n'a été préparée et servie pendant cet intervalle de temps.

10. Le système autonettoyant de distribution de boissons à plusieurs portions selon la revendication 8, **caractérisé en ce que** la procédure d'autonettoyage est adaptée en fonction du type de boisson préparée et servie.

11. Le système autonettoyant de distribution de boissons à plusieurs portions selon la revendication 10, **caractérisé en ce que** le récipient (110) comprend en outre une balise (115) stockant des données pour l'exécution de la procédure d'autonettoyage, le système de distribution de boissons (100) comprenant en outre un lecteur de données sans contact (195) adapté pour lire les données stockées par la balise (115), le régulateur (180) utilisant les données lues par le lecteur de données sans contact (195) à partir de la balise (115) afin d'exécuter la procédure d'autonettoyage.

12. Le système autonettoyant de distribution de boissons à plusieurs portions selon la revendication 1, **caractérisé en ce que**, pendant la procédure d'autonettoyage, la sortie de l'unité de mélange (150) verse tout liquide présent dans l'unité de mélange (140).

13. Le système autonettoyant de distribution de boissons à plusieurs portions selon la revendication 1, **caractérisé en ce que** l'exécution de la procédure d'autonettoyage par le régulateur (180) comprend la détermination de la durée de fonctionnement et de la vitesse de fonctionnement de la pompe de nettoyage (220), de la pompe à eau (160) et de la pompe à ingrédients (170).

14. Le système autonettoyant de distribution de boissons à plusieurs portions selon la revendication 1, comprenant en outre une pompe à air (250), le régulateur (180) étant en outre adapté pour effectuer une procédure de séchage en envoyant des commandes à la pompe à air (250), à la pompe de nettoyage (220) et à la pompe à ingrédients (170) afin de faire circuler l'air dans la pompe de nettoyage (220), le composant d'extraction de liquide (120), la pompe à ingrédients (170) et l'unité de mélange (140), la pompe à air (250) étant reliée à un conduit de liquide (251) reliant la pompe de nettoyage (220) et l'unité de mélange (140) à la pompe à eau (160).

15. Le système autonettoyant de distribution de boissons à plusieurs portions selon la revendication 1, comprenant en outre un module à ultraviolets C (UV-C) (240), les rayonnements UV-C émis par le module UV-C (240) couvrant une zone (245) du système de distribution de boissons (100) où se trouvent un ou plusieurs composants du système de distribution de boissons (100).
